# EUROPEAN PATENT APPLICATION

(11) **EP 4 621 375 A1**
(43) Date of publication of application: **24.09.2025**
(21) Application number: 25162661.0
(22) Date of filing: 10.03.2025
(51) Int. Cl.: G01M 11/00

(54) **OPTICAL PULSE TESTER AND MEASUREMENT METHOD**

(30) Priority: 21.03.2024 JP 2024045188
(71) Applicant: Yokogawa Electric Corporation, Tokyo 180-8750 (JP); Yokogawa Test & Measurement Corporation, Hachioji-shi, Tokyo 192-8566 (JP)
(72) Inventor: SONODA, Naohiro, Tokyo, 192-8566 (JP); TAKIKAWA, Akira, Tokyo, 192-8566 (JP); KOKUBO, Tsukasa, Tokyo, 192-8566 (JP)
(74) Representative: Stöckeler, Ferdinand

(57) **Abstract**

An optical pulse tester (10) according to the present disclosure measures crosstalk between cores of a multicore optical fiber. The optical pulse tester (10) includes a laser element (12) configured to generate an optical pulse, an output port (20) configured to output the optical pulse to one core among a plurality of cores in the multicore optical fiber, an input port (30) configured to receive backscattered light generated in a core other than the one core among the plurality of cores, and a photodetector (13) configured to detect the backscattered light received by the input port (30).

## Description

### CROSS-REFERENCE TO RELATED APPLICATION

The present application claims priority to Japanese Patent Application No. 2024-045188 filed on March 21, 2024, the entire contents of which are incorporated herein by reference.

### TECHNICAL FIELD

The present disclosure relates to an optical pulse tester and a measurement method.

### BACKGROUND

Optical fibers include single-core optical fibers with one core and multicore optical fibers with a plurality of cores.

Multicore optical fibers have a plurality of cores densely arranged in the cladding. This causes crosstalk between the cores.

In the past, various techniques for measuring crosstalk between cores in multicore optical fibers have been considered. For example, Patent Literature (PTL) 1 discloses a technique for measuring crosstalk using a plurality of OTDR (Optical Time Domain Reflectometer) devices.

### CITATION LIST

### Patent Literature

PTL 1: JP 2012-202827 A

### SUMMARY

The measurement method described in PTL 1 requires the use of a plurality of OTDR devices and cannot easily measure crosstalk between cores in multicore optical fibers.

Another possible method for measuring crosstalk between cores in a multicore optical fiber is to input an optical pulse through an optical directional coupler to one core among the plurality of cores, and receive and measure the backscattered light, generated in the other cores, through the same optical directional coupler. In this measurement method, the backscattered light from the core to which the optical pulse is inputted leaks out through the optical directional coupler and is added to the backscattered light generated in the other cores, because the blocking capability of the optical directional coupler is not perfect. It is therefore difficult to measure only the backscattered light generated in other cores, making it difficult to measure crosstalk accurately.

It would thus be helpful to provide an optical pulse tester and a measurement method capable of easily and accurately measuring crosstalk between cores in a multicore optical fiber.

An optical pulse tester according to several embodiments is an optical pulse tester for measuring crosstalk between cores of a multicore optical fiber, the optical pulse tester including a laser element configured to generate an optical pulse, an output port configured to output the optical pulse to one core among a plurality of cores in the multicore optical fiber, at least one input port configured to receive backscattered light generated in a core other than the one core among the plurality of cores, and at least one photodetector configured to detect the backscattered light received by the input port. According to such an optical pulse tester, the crosstalk between cores in a multicore optical fiber can be measured easily and accurately.

In the optical pulse tester according to an embodiment, the at least one input port may include a plurality of input ports. This enables a plurality of backscattered lights to be received simultaneously.

In the optical pulse tester according to an embodiment, the at least one photodetector may include a plurality of photodetectors, and the plurality of photodetectors may be respectively connected to the plurality of input ports. This enables the crosstalk of the plurality of cores to be measured simultaneously.

The optical pulse tester according to an embodiment may further include an optical switch connected to the plurality of input ports, and the optical switch may be configured to output, to the photodetector, any one backscattered light among a plurality of backscattered lights supplied from the plurality of input ports. This enables measurement of the crosstalk of the plurality of cores with a small mounting area.

The optical pulse tester according to an embodiment may further include a controller configured to generate an optical time domain reflectometer (OTDR) waveform based on the backscattered light detected by the photodetector. This enables confirmation of the distribution of crosstalk along the longitudinal direction of the multicore optical fiber.

The optical pulse tester according to an embodiment may further include a display configured to display the OTDR waveform. This enables easy confirmation of the OTDR waveform.

A measurement method according to several embodiments is a measurement method for measuring crosstalk between cores of a multicore optical fiber using an optical pulse tester, the measurement method including generating an optical pulse, outputting the optical pulse from an output port to one core among a plurality of cores in the multicore optical fiber, receiving, by at least one input port, backscattered light generated in a core other than the one core among the plurality of cores, and detecting the backscattered light received by the input port. According to such a measurement method, the crosstalk between cores in a multicore optical fiber can be measured easily and accurately.

According to the present disclosure, an optical pulse tester and a measurement method that can easily and accurately measure the crosstalk between cores in a multicore optical fiber can be provided.

### BRIEF DESCRIPTION OF THE DRAWINGS

In the accompanying drawings:
FIG. 1 is a diagram illustrating a schematic configuration of an optical pulse tester according to a first embodiment;
FIG. 2 is a diagram illustrating an example of an OTDR waveform;
FIG. 3 is a diagram illustrating a schematic configuration of an optical pulse tester according to a second embodiment;
FIG. 4 is a diagram illustrating a schematic configuration of an optical pulse tester according to a comparative example;
FIG. 5A is a diagram illustrating an example of an OTDR waveform that is measured in an optical pulse tester according to a comparative example and that is affected by leakage from an optical directional coupler; and
FIG. 5B is a diagram illustrating an example of an OTDR waveform that is measured in an optical pulse tester according to a comparative example and from which the effect of leakage from an optical directional coupler has been removed.

### DETAILED DESCRIPTION

Embodiments of the present disclosure are described below with reference to the drawings.

### (First Embodiment)

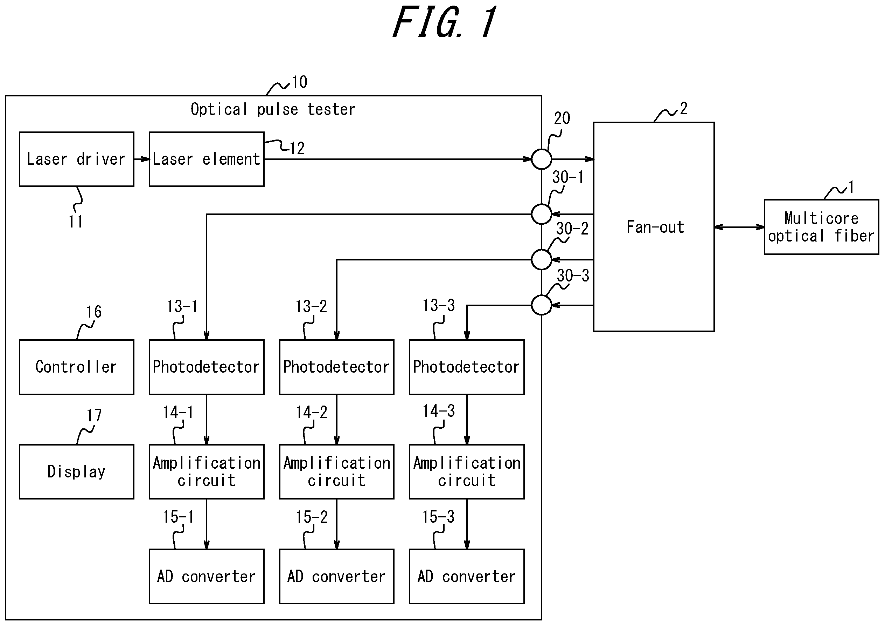

FIG. 1 illustrates the schematic configuration of an optical pulse tester 10 according to a first embodiment. The configuration and functions of the optical pulse tester 10 according to the first embodiment are described with reference to FIG. 1.

The optical pulse tester 10 is a measuring instrument capable of measuring the crosstalk between the cores of a multicore optical fiber 1. The optical pulse tester 10 may, for example, be a measurement instrument capable of functioning as an Optical Time Domain Reflectometer (OTDR).

The multicore optical fiber 1 to be measured is an optical fiber with a plurality of cores in one cladding. The plurality of cores of the multicore optical fiber 1 cause crosstalk between cores.

The multicore optical fiber 1 to be measured is connected to the optical pulse tester 10 via a fan-out 2. The fan-out 2 is an optical fiber element that converts the multiple cores of the multicore optical fiber 1 into a plurality of single-core optical fibers. A single-core optical fiber is an optical fiber with one core in one cladding.

In the example illustrated in FIG. 1, the fan-out 2 converts the four cores in the multicore optical fiber 1 into four single-core optical fibers. Having the fan-out 2 convert to four single-core optical fibers is just one example, and the fan-out 2 may convert the plurality of cores in the multicore optical fiber 1 into any number, two or more, of single-core optical fibers.

The optical pulse tester 10 includes a laser driver 11, a laser element 12, photodetectors 13-1 to 13-3, amplification circuits 14-1 to 14-3, AD converters 15-1 to 15-3, a controller 16, a display 17, an output port 20, and input ports 30-1 to 30-3.

The photodetectors 13-1 to 13-3 are referred to below simply as the photodetector 13 when there is no need to distinguish between them. In FIG. 1, the optical pulse tester 10 includes three photodetectors 13-1 to 13-3, but it suffices for the optical pulse tester 10 to include one or more photodetectors 13.

The amplification circuits 14-1 to 14-3 are referred to below simply as the amplification circuit 14 when there is no need to distinguish between them. In FIG. 1, the optical pulse tester 10 includes three amplification circuits 14-1 to 14-3, but it suffices for the optical pulse tester 10 to include one or more amplification circuits 14.

The AD converters 15-1 to 15-3 are referred to below simply as the AD converter 15 when there is no need to distinguish between them. In FIG. 1, the optical pulse tester 10 includes three AD converters 15-1 to 15-3, but it suffices for the optical pulse tester 10 to include one or more AD converters 15.

The input ports 30-1 to 30-3 are referred to below simply as the input port 30 when there is no need to distinguish between them. In FIG. 1, the optical pulse tester 10 includes three input ports 30-1 to 30-3, but it suffices for the optical pulse tester 10 to include one or more input ports 30.

The laser driver 11 is a drive unit that drives the laser element 12. The laser driver 11 can drive the laser element 12 in response to commands from the controller 16 and cause the laser element 12 to generate an optical pulse.

The laser element 12 generates a laser beam of a predetermined wavelength. The laser element 12 generates an optical pulse when driven by the laser driver 11.

The optical pulse generated by the laser element 12 is outputted from the output port 20. The optical pulse outputted by the output port 20 is inputted to one of the plurality of cores of the multicore optical fiber 1 via the fan-out 2.

Upon an optical pulse being inputted to one core among the plurality of cores in the multicore optical fiber 1, crosstalk occurs from the core into which the optical pulse was inputted to cores other than the core into which the optical pulse was inputted. Hereafter, the "core to which the optical pulse was inputted" may be referred to as the "input core". The "cores other than the core into which the optical pulse was inputted" may be referred to as the "other cores".

Upon an optical pulse being inputted to the input core, the optical pulse leaks out to the other cores due to crosstalk. Upon the optical pulse leaking out to the other cores, backscattered light is generated in the other cores. The backscattered light generated in the three other cores is outputted respectively to input ports 30-1 to 30-3 via the fan-out 2.

The input ports 30-1 to 30-3 respectively receive the backscattered light generated in the three other cores.

The photodetectors 13-1 to 13-3 are respectively connected to the input ports 30-1 to 30-3. The photodetector 13-1 detects the backscattered light received by the input port 30-1. The photodetector 13-1 outputs a current signal corresponding to the light intensity of the detected backscattered light to the amplification circuit 14-1. The photodetector 13-2 detects the backscattered light received by the input port 30-2. The photodetector 13-2 outputs a current signal corresponding to the light intensity of the detected backscattered light to the amplification circuit 14-2. The photodetector 13-3 detects the backscattered light received by the input port 30-3. The photodetector 13-3 outputs a current signal corresponding to the light intensity of the detected backscattered light to the amplification circuit 14-3.

The photodetector 13 may, for example, be a photodiode.

The amplification circuits 14-1 to 14-3 are respectively connected to the photodetectors 13-1 to 13-3. The amplification circuit 14-1 converts the current signal supplied from the photodetector 13-1 into a voltage signal and amplifies the converted voltage signal. The amplification circuit 14-1 outputs the amplified voltage signal to the AD converter 15-1. The amplification circuit 14-2 converts the current signal supplied from the photodetector 13-2 into a voltage signal and amplifies the converted voltage signal. The amplification circuit 14-2 outputs the amplified voltage signal to the AD converter 15-2. The amplification circuit 14-3 converts the current signal supplied from the photodetector 13-3 into a voltage signal and amplifies the converted voltage signal. The amplification circuit 14-3 outputs the amplified voltage signal to the AD converter 15-3.

The amplification circuit 14 may be an amplification circuit with any appropriate configuration.

The AD converters 15-1 to 15-3 are respectively connected to the amplification circuits 14-1 to 14-3. The AD converter 15-1 samples the analog voltage signal supplied from the amplification circuit 14-1 at a predetermined time interval and converts the sampled analog voltage signal into a digital signal. The AD converter 15-1 outputs the digital signal to the controller 16. The AD converter 15-2 samples the analog voltage signal supplied from the amplification circuit 14-2 at a predetermined time interval and converts the sampled analog voltage signal into a digital signal. The AD converter 15-2 outputs the digital signal to the controller 16. The AD converter 15-3 samples the analog voltage signal supplied from the amplification circuit 14-3 at a predetermined time interval and converts the sampled analog voltage signal into a digital signal. The AD converter 15-3 outputs the digital signal to the controller 16.

The AD converter 15 may be an AD converter with any appropriate configuration.

The controller 16 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit is, for example, a field-programmable gate array (FPGA) or an application specific integrated circuit (ASIC). The controller 16 executes processing related to operation of the optical pulse tester 10 while controlling each component of the optical pulse tester 10.

The controller 16 generates the OTDR waveform based on the digital signal supplied from the AD converter 15. Here, the digital signal supplied from the AD converter 15 is a signal corresponding to the light intensity of the backscattered light detected by the photodetector 13.

In the present specification, the "OTDR waveform" designates a waveform with distance on the horizontal axis and light intensity on the vertical axis. The "distance" is the distance along the longitudinal direction of the multicore optical fiber 1 from one end of the multicore optical fiber 1. Here, the one end of the multicore optical fiber 1 is the end on the side at which the optical pulse is inputted. In the OTDR waveform, the "distance" corresponds to the time from when the optical pulse is injected into the multicore optical fiber 1 until the backscattered light returns. In the OTDR waveform, the "light intensity" corresponds to the light intensity of backscattered light.

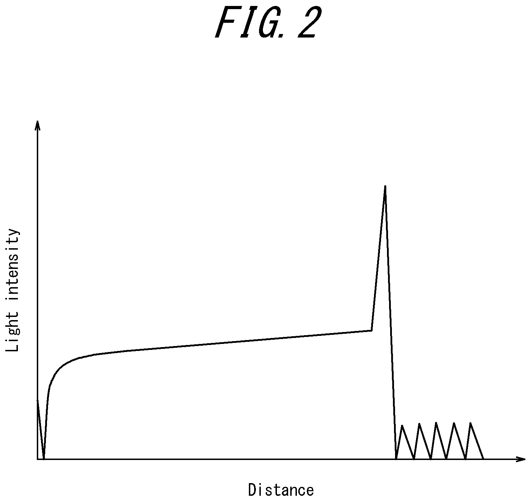

FIG. 2 illustrates an example of an OTDR waveform generated by the controller 16. The controller 16 generates the OTDR waveform for each of the digital signals supplied from the AD converters 15-1 to 15-3. In other words, the controller 16 generates three OTDR waveforms.

By confirming the OTDR waveforms, the user of the optical pulse tester 10 can confirm the distribution along the longitudinal direction of the multicore optical fiber 1 for crosstalk from the input core to the three other cores.

In a case in which the optical pulse tester 10 includes three input ports 30-1 to 30-3, as illustrated in FIG. 1, the controller 16 can generate the OTDR waveforms simultaneously for the three other cores of the multicore optical fiber 1. Therefore, in a case in which the optical pulse tester 10 includes the three input ports 30-1 to 30-3, the user of the optical pulse tester 10 can simultaneously confirm the crosstalk to the three other cores.

The controller 16 controls the laser driver 11 to cause the laser element 12 to generate an optical pulse. The controller 16 can vary the amplification of the amplification circuit 14 according to the light intensity of the backscattered light as detected by the photodetector 13.

The display 17 includes one or more interfaces for output that display information. The display 17 may, for example, include a liquid crystal display (LCD), an organic electro luminescent (EL) display, or the like.

The display 17 can display the OTDR waveform generated by the controller 16.

According to this optical pulse tester 10 of the first embodiment, the crosstalk between cores in the multicore optical fiber 1 can be measured easily and accurately. More specifically, the optical pulse tester 10 separately includes the output port 20, which outputs an optical pulse to one core among a plurality of cores in the multicore optical fiber 1, and the input port 30, which receives backscattered light generated in a core other than the one core among the plurality of cores. Therefore, the optical pulse tester 10 does not need to use an optical directional coupler to measure crosstalk and is not affected by leakage, through the optical directional coupler, of backscattered light from the core to which the optical pulse is inputted. The optical pulse tester 10 can thus accurately measure the crosstalk between cores in the multicore optical fiber 1. In addition, the optical pulse tester 10 outputs the optical pulse from the output port 20 and receives backscattered light at the input port 30, enabling easy measurement of crosstalk with a single device.

The optical pulse tester 10 according to the first embodiment may include a plurality of input ports 30, as illustrated in FIG. 1. In the case of including a plurality of input ports 30, the optical pulse tester 10 according to the first embodiment can simultaneously measure the crosstalk of a plurality of other cores.

### (Second Embodiment)

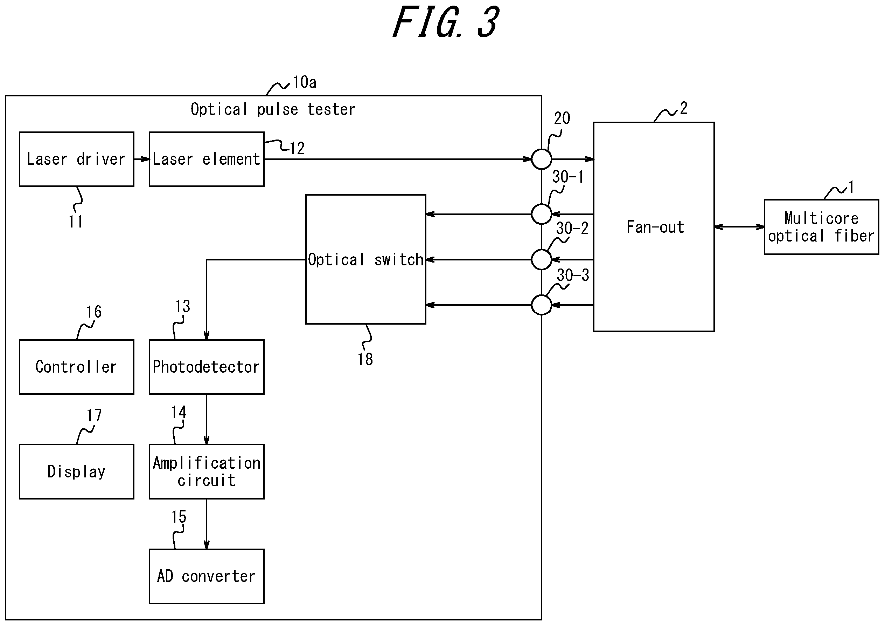

FIG. 3 illustrates the schematic configuration of an optical pulse tester 10a according to a second embodiment. The configuration and functions of the optical pulse tester 10a according to the second embodiment are described with reference to FIG. 3.

The optical pulse tester 10a according to the second embodiment will be described mainly in terms of the differences from the optical pulse tester 10 according to the first embodiment, and a description of the points that are the same as or similar to the optical pulse tester 10 according to the first embodiment will be omitted as appropriate.

The optical pulse tester 10a according to the second embodiment includes a laser driver 11, a laser element 12, a photodetector 13, an amplification circuit 14, an AD converter 15, a controller 16, a display 17, an optical switch 18, an output port 20, and input ports 30-1 to 30-3.

The optical pulse tester 10a according to the second embodiment differs from the optical pulse tester 10 according to the first embodiment in that it has one each of the photodetector 13, amplification circuit 14, and AD converter 15. The optical pulse tester 10a according to the second embodiment also differs from the optical pulse tester 10 according to the first embodiment by inclusion of the optical switch 18.

The optical switch 18 is connected to input ports 30-1 to 30-3. The optical switch 18 outputs, to the photodetector 13, any one backscattered light among a plurality of backscattered lights supplied from the input ports 30-1 to 30-3.

The optical switch 18 may be an optical switch with any appropriate configuration capable of selecting and outputting any one light among a plurality of inputted lights.

The controller 16 controls the optical switch 18 so that the optical switch 18 switches which backscattered light among the plurality of backscattered lights is outputted to the photodetector 13.

The optical pulse tester 10a according to the second embodiment has a reduced number of components, since only one photodetector 13, one amplification circuit 14, and one AD converter 15 are required. Therefore, the optical pulse tester 10a according to the second embodiment can reduce the mounting area of the photodetector 13, the amplification circuit 14, and the AD converter 15 on the circuit board.

Like the optical pulse tester 10 according to the first embodiment, the optical pulse tester 10a according to the second embodiment can easily and accurately measure the crosstalk between cores in the multicore optical fiber 1.

### (Comparative Example)

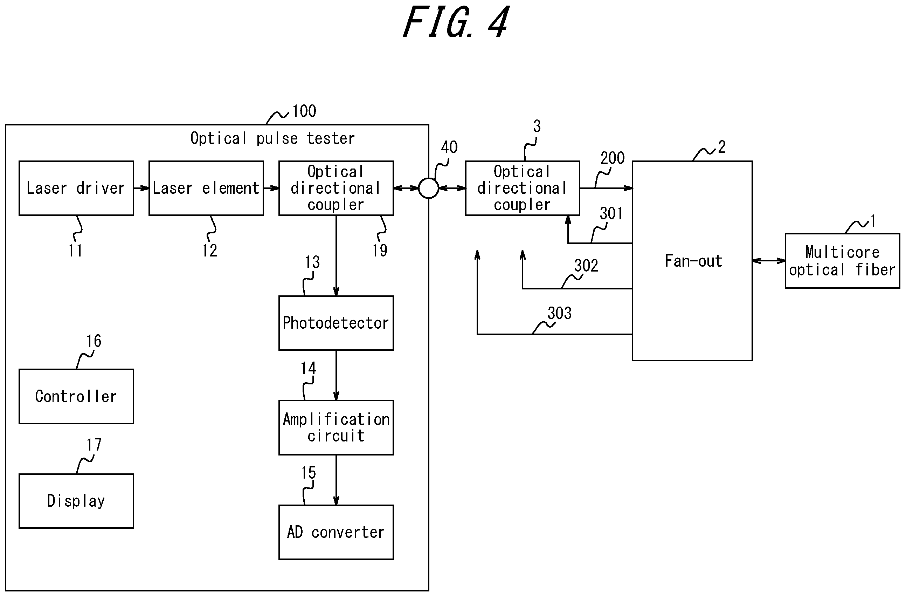

FIG. 4 illustrates a schematic configuration of an optical pulse tester 100 according to a comparative example. The optical pulse tester 100 according to the comparative example is described with reference to FIG. 4. The optical pulse tester 100 according to the comparative example is a measuring instrument capable of measuring the crosstalk between the cores of a multicore optical fiber 1.

The optical pulse tester 100 according to the comparative example includes a laser driver 11, a laser element 12, a photodetector 13, an amplification circuit 14, an AD converter 15, a controller 16, a display 17, an optical directional coupler 19, and an input/output port 40.

The optical directional coupler 19 is an optical element that passes light in a specific direction. The optical directional coupler 19 outputs the optical pulse supplied from the laser element 12 to the input/output port 40. The optical directional coupler 19 also outputs the backscattered light supplied from the input/output port 40 to the photodetector 13.

The optical pulse tester 100 according to the comparative example is connected via an optical directional coupler 3 and a fan-out 2 to the multicore optical fiber 1 to be measured.

The fan-out 2 converts the four cores of the multicore optical fiber 1 into a single-core optical fiber 200 and single-core optical fibers 301 to 303. The single-core optical fiber 200 is connected to the input core of the multicore optical fiber 1. The single-core optical fibers 301 to 303 are respectively connected to the three other cores of the multicore optical fiber 1.

The optical directional coupler 3 is an optical element that passes light in a specific direction. The optical directional coupler 3 allows optical pulses supplied from the input/output port 40 of the optical pulse tester 100 to enter the input core of the multicore optical fiber 1 via the fan-out 2.

The optical directional coupler 3 can be connected to any of the single-core optical fibers 301 to 303. The optical directional coupler 3 outputs the backscattered light supplied from the connected single-core optical fiber among the single-core optical fibers 301 to 303 to the input/output port 40 of the optical pulse tester 100.

FIG. 4 illustrates a state in which the single-core optical fiber 301, among the single-core optical fibers 301 to 303, is connected to the optical directional coupler 3. In this case, the backscattered light generated by crosstalk in the other cores of the multicore optical fiber 1 connected to the single-core optical fiber 301 is outputted to the input/output port 40 of the optical pulse tester 100.

The backscattered light received by the input/output port 40 from the optical directional coupler 3 is outputted by the optical directional coupler 19 to the photodetector 13. The processing after the photodetector 13 detects the backscattered light is the same as that of the optical pulse tester 10 according to the first embodiment.

In the case of measuring the crosstalk between the cores of a multicore optical fiber 1 with the optical pulse tester 100 according to the comparative example, the following problems arise.

When the optical pulse outputted by the optical pulse tester 100 from the input/output port 40 is inputted to the input core of the multicore optical fiber 1, backscattered light is also generated in the input core. The backscattered light generated in the input core is inputted to the optical directional coupler 3 via the single-core optical fiber 200.

The optical directional coupler 3 is not intended for outputting the backscattered light inputted from the single-core optical fiber 200 to the input/output port 40 of the optical pulse tester 100. However, since the blocking capability of the optical directional coupler 3 is not perfect, some of the backscattered light inputted to the optical directional coupler 3 from the single-core optical fiber 200 leaks out to the input/output port 40 of the optical pulse tester 100.

As a result, the optical pulse tester 100 according to the comparative example ends up measuring the sum of the backscattered light from another core, which is the intended measurement target, and the backscattered light, from the input core, that has leaked from the optical directional coupler 3.

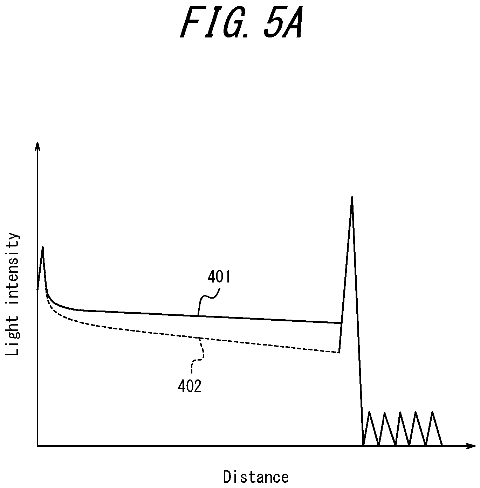

FIG. 5A illustrates an example of an OTDR waveform measured by the optical pulse tester 100 according to the comparative example in this state.

In FIG. 5A, the waveform 401 is an OTDR waveform yielded upon measuring the sum of the backscattered light from another core, which is the intended measurement target, and the backscattered light, from the input core, that has leaked from the optical directional coupler 3. The waveform 402 is the OTDR waveform due only to the backscattered light, from the input core, that has leaked from the optical directional coupler 3.

In the optical pulse tester 100 according to the comparative example, the effect of backscattered light, from the input core, that has leaked from the optical directional coupler 3 can still be removed. In this case, it suffices to measure the OTDR waveform in the waveform 402 first with none of the single-core optical fibers 301 to 303 connected, and then subtract the result from the OTDR waveform in the waveform 401 measured with the single-core optical fiber 301 connected.

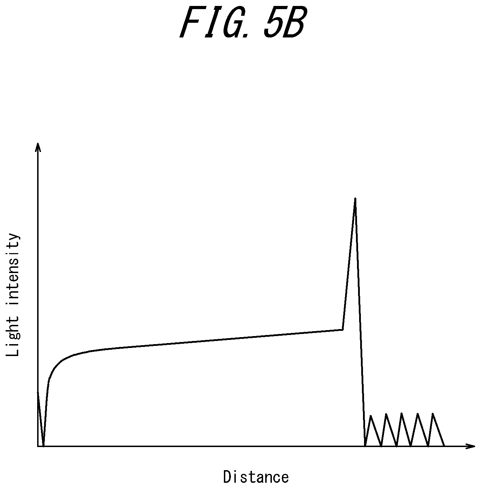

FIG. 5B illustrates the OTDR waveform, measured in this way, due to backscattered light from the other core, which is the intended target of measurement. The OTDR waveform in FIG. 5B is the waveform originally intended to be measured.

However, in the case of such measurement, it is necessary to measure the OTDR waveform in advance with none of the single-core optical fibers 301 to 303 connected. This increases the number of measurements and the time and effort required to connect and disconnect the single-core optical fiber 301. In addition, if noise is present in the measurement results when the OTDR waveform is measured in advance with none of the single-core optical fibers 301 to 303 connected, the effect of noise appears when subtracting the OTDR waveform measured in advance, making it impossible to obtain highly accurate measurement results.

In order to measure the crosstalk of all three other cores with the optical pulse tester 100 according to the comparative example, the connections between the single-core optical fibers 301 to 303 and the optical directional coupler 3 must be reset each time a measurement is made, and measurements must be made in sequence. The optical pulse tester 100 according to the comparative example therefore cannot measure the crosstalk of a plurality of other cores simultaneously.

In contrast, the optical pulse tester 10 according to the first embodiment and the optical pulse tester 10a according to the second embodiment include the output port 20 and the input port 30 separately, making it unnecessary to install the optical directional coupler 3 between the fan-out 2 and the optical pulse tester 10a.

The optical pulse tester 10 according to the first embodiment and the optical pulse tester 10a according to the second embodiment can therefore accurately measure crosstalk with the effect of backscattered light from the input core completely eliminated.

In addition, the optical pulse tester 10 according to the first embodiment and the optical pulse tester 10a according to the second embodiment do not need to measure the OTDR waveform in advance with all of the single-core optical fibers 301 to 303 disconnected, as in the optical pulse tester 100 according to the comparative example. Therefore, the optical pulse tester 10 according to the first embodiment and the optical pulse tester 10a according to the second embodiment can measure crosstalk in a single measurement and without the time and effort of connecting and disconnecting the single-core optical fibers 301 to 303.

In the case of including a plurality of input ports 30 and photodetectors 13 in the optical pulse tester 10 according to the first embodiment, the optical pulse tester 10 according to the first embodiment can measure the crosstalk of a plurality of other cores simultaneously and therefore can measure the crosstalk of the plurality of other cores in a short time.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are included therein.

For example, the arrangement, number, and the like of the above-described components are not limited to the above explanation or the drawings. The arrangement, number, and the like of each component may be selected freely as long as the functions of the component can be achieved.

For example, in the above embodiments, the case of the number of input ports 30 being three was described as an example, but the number of input ports 30 is not limited to three and may be any number, one or more.

## Claims

1. An optical pulse tester for measuring crosstalk between cores of a multicore optical fiber, the optical pulse tester comprising:
a laser element configured to generate an optical pulse;
an output port configured to output the optical pulse to one core among a plurality of cores in the multicore optical fiber;
at least one input port configured to receive backscattered light generated in a core other than the one core among the plurality of cores; and
at least one photodetector configured to detect the backscattered light received by the input port.

2. The optical pulse tester according to claim 1, wherein the at least one input port comprises a plurality of input ports.

3. The optical pulse tester according to claim 2, wherein
the at least one photodetector comprises a plurality of photodetectors; and
the plurality of photodetectors is respectively connected to the plurality of input ports.

4. The optical pulse tester according to claim 2, further comprising
an optical switch connected to the plurality of input ports, wherein
the optical switch is configured to output, to the photodetector, any one backscattered light among a plurality of backscattered lights supplied from the plurality of input ports.

5. The optical pulse tester according to claim 1, further comprising a controller configured to generate an optical time domain reflectometer waveform based on the backscattered light detected by the photodetector.

6. The optical pulse tester according to claim 5, further comprising a display configured to display the optical time domain reflectometer waveform.

7. A measurement method for measuring crosstalk between cores of a multicore optical fiber using an optical pulse tester, the measurement method comprising:
generating an optical pulse;
outputting the optical pulse from an output port to one core among a plurality of cores in the multicore optical fiber;
receiving, by at least one input port, backscattered light generated in a core other than the one core among the plurality of cores; and
detecting the backscattered light received by the input port.

8. The measurement method according to claim 7, wherein the optical pulse tester comprises a plurality of the input ports.

9. The measurement method according to claim 8, wherein the optical pulse tester comprises
a plurality of photodetectors configured to detect the backscattered light, and
the plurality of photodetectors is respectively connected to the plurality of input ports.

10. The measurement method according to claim 8, wherein
the optical pulse tester comprises an optical switch connected to the plurality of input ports, and
the optical switch is configured to output any one backscattered light among a plurality of backscattered lights supplied from the plurality of input ports.

11. The measurement method according to claim 7, further comprising generating an optical time domain reflectometer waveform based on the detected backscattered light.

12. The measurement method according to claim 11, further comprising displaying the optical time domain reflectometer waveform.
